# EUROPEAN PATENT APPLICATION

(11) **EP 1 942 167 A1**
(43) Date of publication of application: **09.07.2008**
(21) Application number: 08150083.7
(22) Date of filing: 08.01.2008
(51) Int. Cl.: C09J 7/02, B65D 75/36

(54) **Tape provided with adhesive layer and information.**

(30) Priority: 08.01.2007 NL 1033183
(71) Applicant: InnoSeal Systems International B.V.i.o., 2909 LC Capelle a/d Ijssel (NL)
(72) Inventor: Aarts, Guido Maurinus Adriana Maria, 5151 JS Drunen (NL)
(74) Representative: Hatzmann, Martin

(57) **Abstract**

A self-adhesive tape, provided with a longitudinal direction, a first surface and an opposite, second surface, wherein the first surface is provided with an adhesive layer and the second surface with information.

## Description

The invention relates to self-adhesive tape with printing.

Self-adhesive tape, in particular masking tape, exists in many different forms. These tapes differ from each other in particular through the adhesive that is used, which adhesive as adhesive layer makes the tape suitable for different applications. For instance, for different substrates on which tape is used, each time, a suitable adhesive layer can be chosen, or the adhesive layer can be chosen because of a treatment of the surface on which it is applied, for instance suitable for particular solvents, ambient factors such as sunlight, UV radiation, duration of fastening and the like. Usually, rolls of tape are packaged in, for instance, paper or plastic while instructions for use are enclosed, or are printed on the package. Instructions for use may for instance comprise intended use, suitable substrates, suitable ambient conditions, weather resistance, suitability for different solvents and finishing layers of a surface and the like.

After the tape has been unpacked and has for instance been adhered to a substrate to be finished, often, the instructions for use are lost, so that to a user, it has become unclear how the tape is used best, for instance when, and optionally how it is to be removed.

The object of the invention is to provide an alternative embodiment of self-adhesive tape, in particular self-adhesive tape such as masking tape, which is more convenient in use.

In a first aspect, self-adhesive tape according to the invention is characterized in that the tape is provided with a longitudinal direction, a first surface and an opposite, second surface, wherein the first surface is provided with an adhesive layer and the second surface with information, while the information comprises information for use about the use of the tape, in particular information for use relating to suitable applications of the tape such as substrates and finishes on which the tape can be suitably utilized.

As the information for use, which presents, in fact, instructions for use, is provided on the surface of the tape remote from the adhesive layer, it always remains connected with the tape, for instance on a roll as well as on a substrate to be finished, so that it is always visible to a user. As a result, also after a longer period of time and without having a packaging, if any, at hand, a user can each time select the suitable tape and each time carry out the most suitable operations. An additional advantage may be that less material is required for distribution of the tape. For instance, a separate package with instructions for use thereon is no longer required, while, furthermore, no separate instructions for use need to be printed.

Furthermore, it can be advantageous to provide on the same side as the information for use or instead thereof, a user indication, such as for instance the name of a user or his or her logo. This offers the advantage that if for instance after use rests of tape remain behind it becomes possible in a simple manner for, for instance, a manager of a user space to track the polluter and to incite him to remove these.

Preferably, the tape is wound onto a core, wherein the information for use is provided in blocks while different blocks are provided one behind the other in longitudinal direction and, preferably, each comprise the information for use.

In a second aspect, the invention is characterized by the features of claim 6.

By providing a set of rolls with wound, self-adhesive tape, whereby different rolls are distinguished from one another by, on the one side, the adhesive layers and, on the other side, the information for use, the desired roll can each time be chosen in a simple manner by the user and be used correctly.

In a third aspect, the invention is characterized by the presentation of rolls of self-adhesive tape, in particular masking tape, while the rolls are provided with a repetitive pattern of information for use on a side remote from the adhesive layer.

In a fourth aspect, the invention is characterized by the manufacture of rolls of self-adhesive tape, in particular according to the invention, wherein self-adhesive tape with a longitudinal direction and a transverse direction is wound around a core in a manner such that the transverse direction extends approximately parallel to a longitudinal direction of the core, while an adhesive layer faces the core and, on an opposite surface, at least one row, and preferably a series of parallel rows of information blocks are provided, which rows include an angle with the longitudinal direction and the transverse direction such that in wound condition, the or each row forms a spiral course around the core, whereupon the wound strip of tape is divided approximately transversely to the longitudinal direction of the core into a series of rolls of self-adhesive tape.

This manner of applying information can offer several advantages. For instance, the width of the rolls into which the wound strip is divided can be selected relatively freely, without there being the danger that a roll without information for use is obtained. Furthermore, it is guaranteed in a simple manner that the information for use is visible in a simple and proper manner, and, where required, can be read on the outside of the tape.

In clarification of the invention, exemplary embodiments will be explained in further detail on the basis of the drawing. In the drawing:
Fig. 1 schematically shows, in perspective view, two rolls of wound, self-adhesive tape with user information;
Fig. 1A schematically shows a piece of a strip of self-adhesive tape with information fields;
Fig. 2 shows a portion of a display unit, in side view, with rolls of tape according to the invention;
Fig. 3 shows, in top plan view, a portion of a strip of adhesive tape during winding around a core, prior to it being divided into rolls of self-adhesive tape; and
Fig. 4 shows a series of four different pieces of tape with different user information.

In this description, identical or corresponding parts have identical or corresponding reference numerals. The embodiments shown should not be construed to be limitative in any manner and merely serve as illustration of the invention.

Herein, tape is at least understood to mean self-adhesive strips of material such as paper, woven or nonwoven material such as fabric or plastic, suitable for at least temporarily masking surfaces or parts of a surface in order to protect, during an operation to an adjoining surface or part thereof, the masked surface or surface part. Such tape is usually also indicated as masking tape, painting tape and the like.

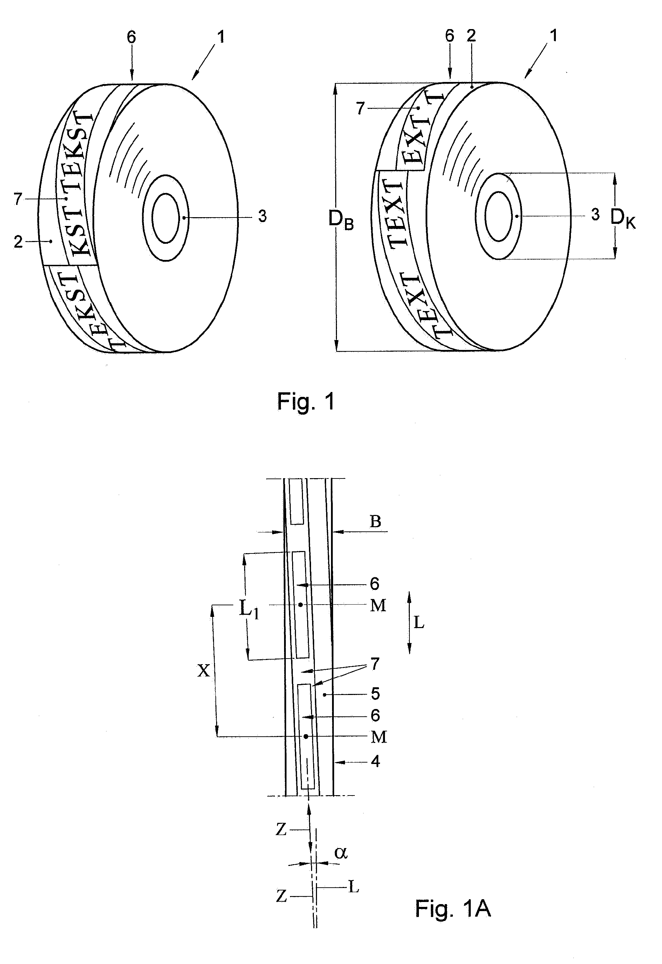

In Fig. 1, schematically, in perspective view, two rolls 1 of tape 2 are shown, wherein the tape 2 is wound on a core 3 made of, for instance, cardboard or plastic. The strip of tape 2 has a longitudinal direction L and, in this longitudinal direction, a length that is considerably greater than the width B and than the outer circumference of the core 3, for instance such that tens or even hundreds or more of windings of the strip of tape 2 can be wound around the core 3. The strip of tape 2 has a first surface 4 which, at least on the roll 1, faces the core 3 and is provided with an adhesive layer, in a manner known per se, and an opposite second surface 5 which, on the roll 1 and during use, faces outwards. The second surface 5 is visible in the Figures and is provided with user information 6, represented in Fig. 1 as "TEXT" and "TEKST" and in Figs. 1A, 2, and 3 as blocks, fields or strips 7 which are provided on the second surface 5 by means of, for instance, printing. In the embodiment shown, the user information is represented in the form of a repetitive pattern of elongated blocks 7. Herein, block or blocks or the like are understood to mean at least but not exclusively an area framed or not framed by lines, or otherwise bordered through coloring or the like, in which user information 6 is included while furthermore, at least but not exclusively these terms are also understood to mean a block of text comprising, or formed by the user information, or combinations thereof. A center of such a block is determined by the visual center of such a block, which can be determined, for instance but not exclusively, by drawing a smallest possible rectangle around the block and determining the arithmetic center thereof.

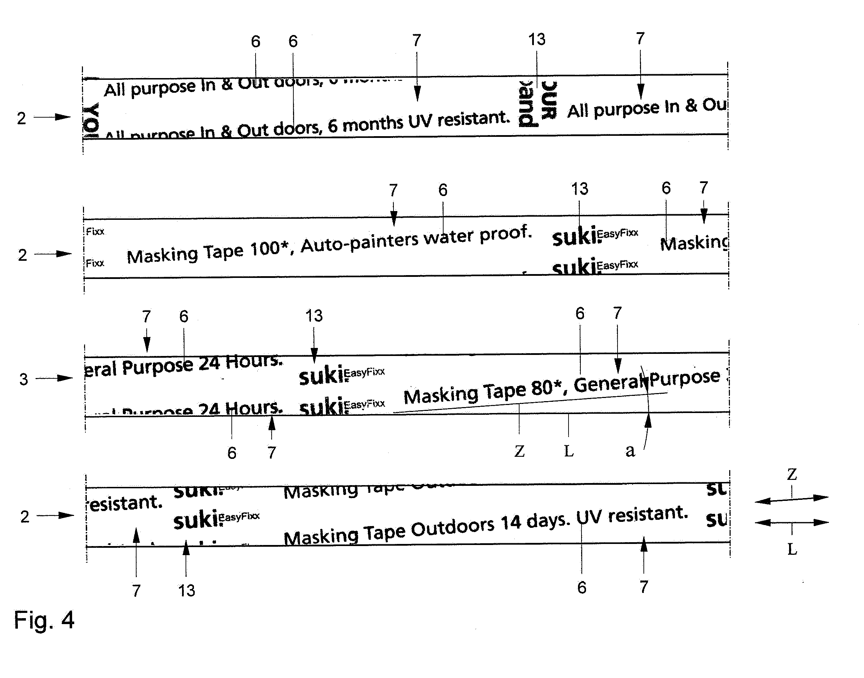

The user information 6 relates to suitable use of the tape 2 and is inseparably connected with the second surface. Preferably, in each block 7, user information 6 is provided which, in itself, is sufficient for a user to understand therefrom how the respective tape 2 can be used. To that end, the user information 6 can comprise, for instance, information about substrate on which the tape can be used best, finishes with which it can be used such as, for instance but not limited to, suitability to particular types of paint, lacquer, oils, wax, chemicals, or for instance, sensitivity to light, such as UV radiation. This user information 6 can also comprise information about a suitable duration of use, type of adhesives and the like, or about dates of production, use and the like. Optionally, further, printing 8 such as logos or other indications of a producer or user of the tape can be provided as shown in, for instance, Fig. 4 as "Suki easy fixx^{™}" or "Your band".

In an embodiment as shown in Figs. 1, 1A and 4, the user information 6 is represented in blocks 7 which are repeated in a regular pattern in approximately the longitudinal direction L of the tape, while the blocks 7 have a length L1 and a repetition frequency which is such that the distance X between the centers M of successive blocks 7 is smaller than the outer circumference of a roll 1, in particular smaller than the outer diameter Db of the roll 1. The distance X can for instance be smaller than four times the roll outside diameter Db, more particular less than pi times the roll outside diameter Db, so that with a full roll, always at least one block 7 is visible from the outside of the roll 1. It is more advantageous when the distance X is smaller, for instance smaller than four times the core outside diameter Dk, more particularly less than pi times the core outside diameter Dk, because then, always, when the tape 2 is still provided on the core 3, at least one block 7 is visible on the tape 2 and, hence, the user information remains visible to the user during the entire life span of the roll 1.

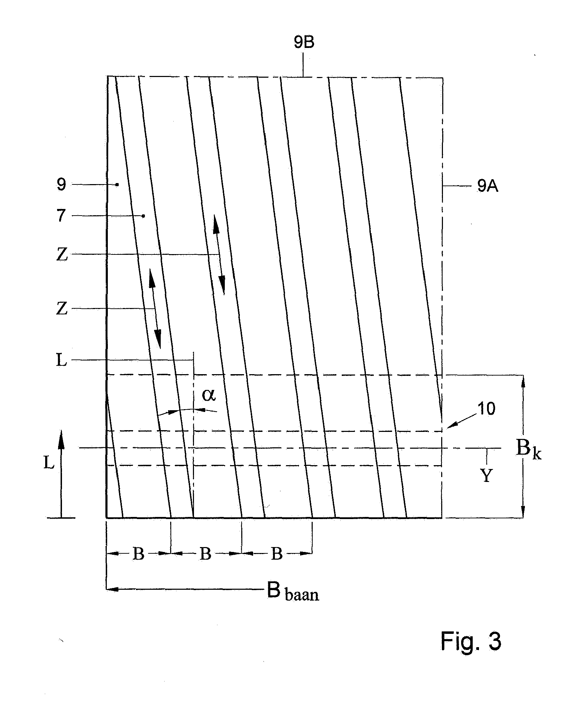

As clearly appears from the Figures, in the embodiments shown, the series of blocks 7, also to be considered as user information fields, have a main direction Z which includes an angle α with the longitudinal direction L of the tape 2. This angle is preferably relatively small, for instance between 1 and 15 - 20 degrees, but can also be greater, for instance smaller than 60 or smaller than 45 degrees. As a result, the text that is provided on or in the blocks or from which the blocks are composed or comprising the blocks is at an angle relative to the longitudinal direction and is to be read at a slight inclination. This can offer a pleasant appearance and is particularly, but not exclusively, advantageous when producing the rolls 1 of tape 2, as will be further explained on the basis of Fig. 3.

In Fig. 3 is shown a portion of a wide web 9 of material from which the strips 2 will be manufactured. On the right hand side in the drawing, and at the top of the drawing, scored lines 9A, 9B are drawn to indicate that the web 9 can be wider and longer. Preferably, the web has a width B_{web} which is considerably greater than the width B of the tape 2 manufactured therefrom. The web has a width B_{web} which is, for instance, more than ten, or even more than 50 times the width B of the tape 2. The web 9 is provided with an adhesive layer and printing, comprising the user information 6 in the bands or blocks 7, schematically indicated as bands, whereupon the web 9 is wound on a core roll 10, which is drawn in interrupted lines in Fig. 3. This core roll has a length at least approximately equal to the width B_{web} of the web 9, and an inside an outside diameter Bk that correspond to those of the core 3 of the rolls to be formed. After the web has been provided in sufficient windings, through winding, onto the core roll, the web is cut off and then rolls 1 of tape 2 are cut from the core roll 10 and the wound web 9 by, for instance, cutting or sawing it at desired positions at right angles to the longitudinal axis Y of the core roll 10. The positions can be determined depending on the width B of the rolls 1 that are desired. Along the bottom in Fig. 3, as an example, a division is schematically represented. The width can be chosen as required and also, in one go, different widths of rolls 1 can be cut.

As the bands or series of blocks 7 include an angle α with the longitudinal direction L of the web and hence with the strips of tape 2, always, on each roll, on the outside surface of the strip of tape 2, the user information will be visible. By selecting the angle α so as not to be too great, virtually the entire length of at least one block 7 becomes visible on each winding, irrespective of the width B to which the rolls 1 are cut, so that always and on each roll 1, the user information is and remains visible from the outside. Herein, the main direction is understood to mean the direction of an imaginary or not imaginary line which can be drawn along the user information blocks 7 in a row, or the direction in which the blocks 7 are placed one behind the other in a series. The main direction can, for that matter, also be provided approximately parallel to the longitudinal direction of the strip. In that case, it is preferred to cut the rolls 1 exactly so that on each roll, each time, at least one series of blocks 7 is provided, for instance by gearing the width of the rollers 1 exactly to the distance between two series of blocks or by choosing the width to be smaller than this mutual distance.

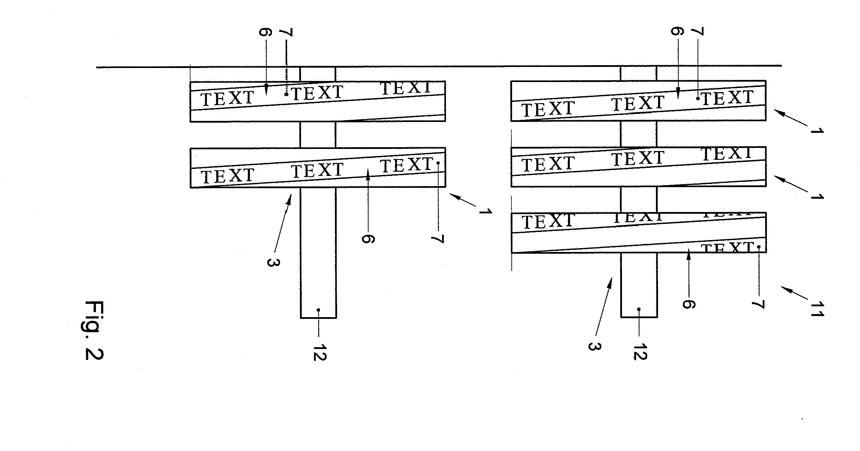

As shown in Fig. 2, the rolls 1 can be suspended from a display 11 by sliding the opening in the core 3 over a pin 12 of the display 11. An outer package such as a foil or box is not required, which is money-saving and, furthermore, environmentally friendly. Naturally, other displays are possible too, for instance one in which the rolls are stacked on a side. Then, the user information remains visible from the outside too.

In Fig. 4, of four different sorts of tape an example is given. The user information 6 is clearly visible, provided as a series of "blocks" 7. It will be clear that the specific information differs per roll, to which end the text on the different strips differs. The specifically shown texts are shown merely by way of illustration and are merely to be considered as illustration. The different strips for that matter can also have different colours and/or textures and be formed or built up from different materials. In several of these strips, in addition to the information blocks 7, a further printing is provided, in this case a logo, a trademark indication 13. In this manner, also, a user identification can be provided, so that from tape that has remained behind, it can be established who has used and/or left this tape.

The invention is not limited in any manner to the embodiments represented in the drawing and the Figures. Many variations thereon are possible within the framework of the invention as outlined by the claims. For instance, the user information can be provided in a different manner, for instance in series proceeding in an undulating or angular manner.

## Claims

1. A self-adhesive tape, provided with a longitudinal direction, a first surface and an opposite, second surface, wherein the first surface is provided with an adhesive layer and the second surface with information, while said information comprises user information about use of the tape, in particular user information relating to suitable applications of the tape such as substrates and finishes on which the tape can be suitably utilized.

2. A self-adhesive tape according to claim 1, wherein said information is provided in a pattern of information blocks repetitive in longitudinal direction.

3. A self-adhesive tape according to claim 2, wherein the tape is wound on a core, while the core has a core outside diameter and the wound tape forms a roll outside diameter, while said pattern has a repetition frequency which is such that the distance between the centers of two successive information blocks is smaller than approximately four times the roll outside diameter, in particular smaller than pi times the roll outside diameter and more particularly smaller than approximately four times the core outside diameter, preferably smaller than pi times the core outside diameter.

4. A self-adhesive tape according to any one of the preceding claims, wherein the user information is inseparably connected with said second surface.

5. A self-adhesive tape according to any one of the preceding claims, wherein, during use, the second surface forms an outside surface.

6. A self-adhesive tape according to any one of the preceding claims, wherein the user information is provided in a pattern on the second surface, which pattern has a main direction, which main direction is not parallel to the longitudinal direction of the tape, in particular includes an angle therewith between 0 and 60 degrees, more particularly between 1 and 45 degrees and preferably between 1 and 15 degrees.

7. A set of rolls of self-adhesive tape wound onto cores according to any one of the preceding claims, wherein at least two rolls in said set have different adhesive layers and different user information, adapted to the respective adhesive layer.

8. A set of rolls according to claim 7, wherein the rolls are provided, unpackaged, in or on a display unit in a manner such that the user information is visible from the outside of the display unit.

9. A method for presenting rolls of adhesive tape, in particular masking tape, wherein the rolls are provided on a side remote from an adhesive layer with a repetitive pattern of user information.

10. A method according to claim 9, wherein different rolls are arranged with different adhesive layers, while the user information is provided depending on the respective adhesive layer.

11. A method according to claim 9 or 10, wherein the rolls are provided in or on a display unit in a manner such that the user information is visible from an outside of the display unit.

12. A method for manufacturing rolls of self-adhesive tape, in particular according to any one of claims 1-8, wherein self-adhesive tape with a longitudinal direction and a transverse direction is wound around a core in a manner such that the transverse direction extends approximately parallel to a longitudinal direction of the core, while an adhesive layer faces the core and, on an opposite surface, at least one row, and preferably a series of parallel rows of information blocks are provided, which rows include an angle with the longitudinal direction and the transverse direction such that in wound condition, the or each row forms a spiral course around the core, whereupon the wound strip of tape is divided approximately transversely to the longitudinal direction of the core in a series of rolls of self-adhesive tape.
